# EUROPÄISCHE PATENTSCHRIFT

(11) **EP 0 346 272 B1**
(45) Veröffentlichungstag und Bekanntmachung des Hinweises auf die Patenterteilung: **26.05.1993**
(21) Anmeldenummer: 89810246.2
(22) Anmeldetag: 03.04.1989
(51) Int. Cl.: B23Q 11/00, G01B 5/00

(54) **Längenmessgerät**
Length-measuring apparatus
Dispositif pour mesurer une longueur

(30) Priorität: 07.06.1988 CH 2173/88
(43) Veröffentlichungstag der Anmeldung: 13.12.1989
(73) Patentinhaber: Meyer, Hans, CH-1020 Renens (CH)
(72) Erfinder: Meyer, Hans, CH-1020 Renens (CH)
(74) Vertreter: Steen, Dieter Markus

(56) Entgegenhaltungen:
- EP-A- 0 053 062
- WO-A-88/02471
- CH-A- 312 250
- CH-A- 472 585
- DE-A- 2 942 822
- FR-A- 2 238 396
- GB-A- 632 903

## Beschreibung

Die Erfindung betrifft ein Längenmessgerät nach Art eines Messschiebers wie im Oberbegriff der unabhängigen Ansprüche definiert. Ein solches Gerät ist zum Beispiel in CH 312.250 beschrieben.

Bei Längenmessgeräten insbesondere für grosse Längen ist es wichtig, dass sie entweder auf das zu messende Objekt oder aber ausserhalb desselben abgestützt werden können, um der gestellten Messaufgabe gerecht zu werden. Bei bekannt gewordenen Geräten, wie zum Beispiel in Figur 3 von CH 312.250 gezeigt ist, besteht die Möglichkeit, Stützelemente an den Enden anzubringen; dies genügt aber nur für eine beschränkte Zahl von Messaufgaben. Es ist das Ziel der Erfindung, diesen Nachteil dadurch zu beseitigen, dass Stützorgane an beliebiger Stelle des Längenmessgerätes verschieb- und festklemmbar angeordnet sind, ohne dadurch die Funktion der eigentlichen Messelemente (Taster, etc.) zu beeinträchtigen. Dadurch wird der Anwendungsbereich solcher Geräte entscheidend erweitert. Für bestimmte Messaufgaben, insbesondere Messungen von grossen Aussendurchmessern, ist es auch notwendig mit langen und grossen Messschäbeln versehene Messelemente zu verwenden. Dabei wird eine sehr lange Schiene benötigt, auf der die Messelement verschoben werden. Eine solche Schiene ist jedoch einer gewissen Durchbiegung unterworfen, die der Messgenanigkeit stark schadet. Bei den meisten grossen Messchnäbeln, zum Beispiel den viertelkreisförmigen Messschnäbeln, ist es weiterhin nicht möglich, gleichzeitig kleine Längen zu messen oder das Gerät durch Berühren der Messanschläge zu nullen.

Die Erfindung bezweckt auch diesen Nachteilen abzuhelfen und ist durch die in den unabhängigen Ansprüchen aufgeführten Merkmale gekennzeichnet.

Das Gerät bietet dadurch die Vorteile, in einfacher Weise und schnell jeder gestellten Messaufgabe angepasst werden zu können und die Messgenauigkeit wegen der grösseren Starrheit zu vergrössern. Auch wird dadurch ermöglicht, grosse Durchmesser und kleinere Längen mit demselben Gerät zu messen und das Gerät zu nullen, wenn auch zum Beispiel grosse viertelkreisförmige Messschnäbel verwendet werden.

Die zwei Schienen sind vorteilhafterweise über ihre ganze Länge mit einem Verbindunsstück verbunden und besitzen Rechteckform. Dies ergibt eine einfache Bauweise und führt zu einer Verbesserung der Steifigkeit.

Die Schienen können mit Vorteil also Verbundkonstruktion aufgebaut sein, bestehend aus einem Kern und auf diesem befestigten Führungselementen. Dies erlaubt eine rationelle Fertigung, und, inbesondere bei grösseren Messgeräten, eine erhebliche Verminderung des Gewichtes und somit verbesserte Messeigenschaften.

Weitere vorteilhafte Ausgestaltungen ergeben sich aus den Merkmalen der abhängigen Patentansprüche und der nachfolgenden Beschreibung, in welcher ein Ausführungsbeispiel und mehrere Varianten anhand der beigefügten Zeichnungen beschrieben werden. Es zeigen :
Figur 1, eine Frontansicht des Ausführungsbeispiels;
Figur 2, eine Ansicht von oben dieses Ausführungsbeispiels;
Figur 3, einen Schnitt durch Figur 1 längs der Ebene III-III;
Figur 4, einen Schnitt durch Figur 1 längs der Ebene IV-IV;
Figur 5, einen Teilschnitt durch Figur 1 längs der Ebene V-V;
Figur 6, eine Frontansicht einer Variante;
Figur 7, die Variante von Figur 6 in einer anderen Lage der der Tastorgane dargestellt;
Figur 8, einen Querschnitt gemäss der Ebene VIII-VIII in Figur 6;
Figuren 9 und 10, Querschnitte durch die Schienen zweier weiteren Varianten;
Figur 11, eine Ansicht von oben der in Figur 10 dargestellten Schienen.

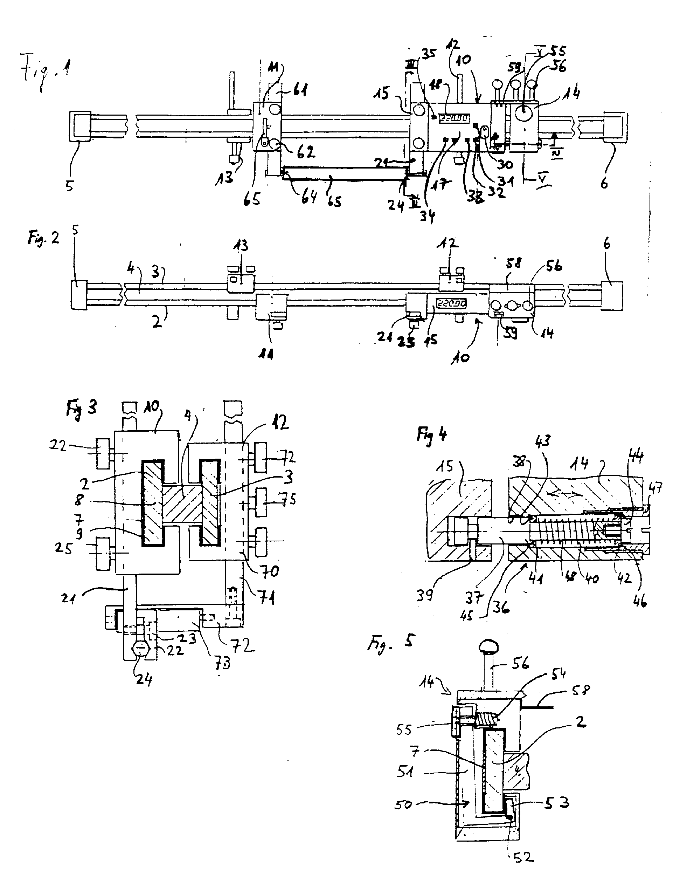

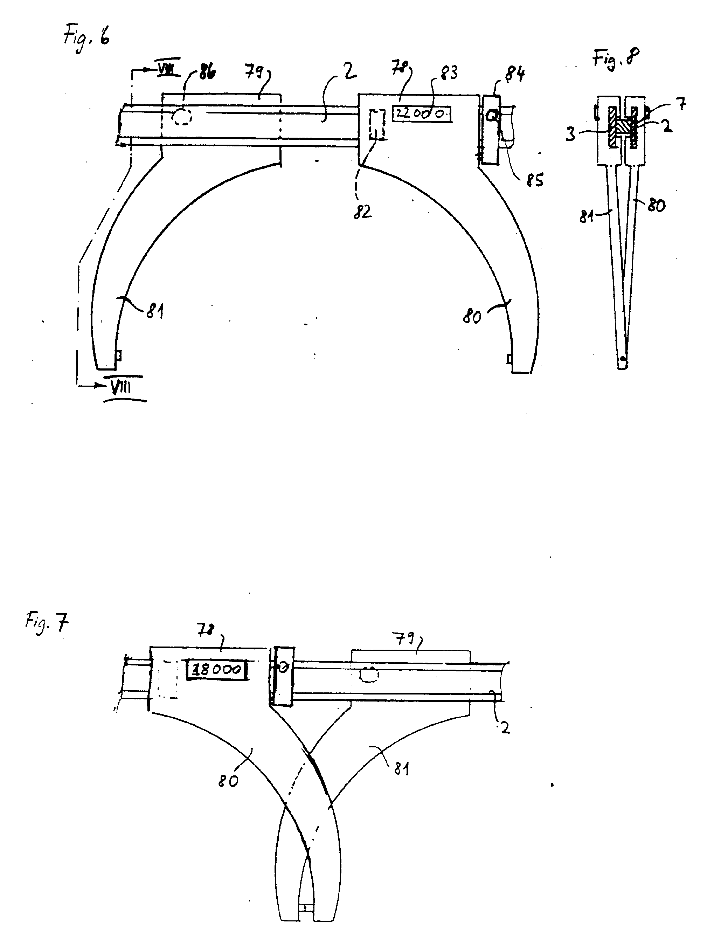

Das in den Figuren 1 bis 5 dargestellte erste Ausführungsbeispiel umfasst einen Querbalken 1, der zwei parallel zueinander angeordnete Schienen 2 und 3 aufweist, die über eine durchgehende Mittelleiste 4 miteinander verbunden sind. Auf der einen Schiene 2, die als Messschiene bezeichnet werden kann, sind Messelemente 10 und 11 verschiebbar angeordnet, während die andere Schiene 3 in ihrer Funktion als Stützschiene verschiebbare Stützelemente 12 und 13 trägt. Beidseidig auf dem Querbalken 1 angebrachte Endstücke 5 und 6 verhindern ein Herausfallen der Elemente 10 - 13. Beide Schienen 2 und 3 weisen einen rechteckigen Querschnitt auf. Die Messschiene 2 ist mit einem Massstab 7 (Figur 3) ausgerüstet.

Um das Gewicht des Messgerätes möglichst tief zu halten, werden die Schienen im Leichtbau ausgeführt mit einem Kern 8 aus Leichtmaterial, zum Beispiel einem mit Fasern verstärkten Kunststoff, und den Laufflächen 9 aus gehärtetem Stahl.

Die auf der Messschiene angeordneten Messelemente 10 und 11 bestehen aus einem verstellbaren Gegenanschlagselement 11 und einem zweiteiligen Messelement 10, das einen Messkopf 15 und ein mit diesem gekoppeltes Zustellelement 14 aufweist. Ein auf dem Messkopf 15 befindlicher kapazitiver Aufnehmer 17 tastet den auf der Schiene 2 angebrachten Massstab 7 ab. Die erhaltenen Signale werden durch eine nicht weiter dargestellte Schaltung umgearbeitet und im Fenster 18 (Figur 1) zur Anzeige gebracht. Kapazitive Messsysteme und deren elektronische Schaltungen zur Angabe der relativen Stellung von Messkopf und Massstab sind zum Beispiel in EP 0.053.091, EP 0.227.591 und EP 0.245.199 näher beschrieben. Solche Messsysteme sind vorteilhafterweise mit einer Batterie 30, einer Ein/Aus-Schaltung 31, einer Nulltaste 32 zur frei wählbaren Nullstellung, einer Maximalwerttaste 33, Wertvorwahltasten 34, und einer mm/inch Umstellung 35 versehen.

Ein Taster 21 ist in der Höhe verstellbar im Messkopf 15 aufgenommen und wird durch Schrauben 25 gesichert. Er trägt an seinem unteren Ende einen mittels Stellstück 22 und Schraube 23 befestigten Tastbolzen 24. Der Messkopf 15 ist über eine Federkupplung 36 mit dem Zustellelement 14 verbunden. Diese Federkupplung 36 weist einen Bolzen 37 auf, der in einer Aussparung 38 des Zustellelementes 14 und des Messkopfes 15 längsverschiebbar gelagert ist. Ein Stift 39, erlaubt es, den Bolzen 37 im Messkopf 15 zu sichern. Eine Schraubenfeder 40 umgibt einen verjüngten Teil 48 des Bolzens 37 und stützt sich über Ringe 41 und 42 einerseits gegen einen Vorsprung 43 des Bolzens 37 und andererseits gegen eine am Bolzenende angebrachte Anstellschraube 44. Der Ring 41 stützt sich weiterhin auf einen Vorsprung 45 der Aussparung 38 ab, währenddem Ring 42 mit einem Vorsprung 46 einer Hohlschraube 47 zusammenwirkt. Die Schraubenfeder 40 ist somit unter einer gewissen Vorspannung zwischen den beiden Ringen 41 und 42 gelagert, wodurch der Messkopf 15 gegenüber dem Zustellteil 14 entgegen der Federkraft in entgegengesetzte Richtungen verschoben werden kann.

Wie in Figur 5 dargestellt ist das Zustellelement 14 mit einem durch Fingerdruck lösbaren Klemmorgan 50 versehen, das aus einem um eine Achse 52 schwenkbaren Kniehebel 51 besteht, dessen abgewinkeltes Endstück 53 von einer Schraubenfeder 54 gegen die Schiene 2 gedrückt wird. Das Klemmorgan 50 wird durch Fingerdruck auf den Auslöseknopf 55 freigegeben und das Messelement 10 kann somit mit den Handgriffen 56 auf der Schiene 2 verschoben werden. Um beim Überkreuzen der Stützelemente ein Einklemmen der Finger zu verhindern ist das Zustellorgan 14 mit einem Winkelstück 58 (Figur 5) versehen.

Zustellorgan 14 und Messkopf 15 besitzen weiterhin sich gegenüberliegende Strichmarken 59, die es erlauben den Messkopf 15 über das Zustellorgan 14 mit einer wiederholbaren Messkraft gegen ein Messobjekt anzulegen und nach dem Freigeben des Auslöseknopfes 55 in dieser Stellung zu verriegelen.

Wie ersichtlich in Figur 1 ist das Gegenanschlagselement 11 ebenfalls auf der Schiene 2 verschiebbar angeordnet und kann mittels eines Verriegelungshebels 65 arretiert werden. Ein Taster 61 ist in der Höhe verstellbar im Gegenanschlagselement 11 aufgenommen und wird durch Schrauben 62 gesichert. An seinem unteren Ende trägt er einen Tastbolzen 64, der mit dem Tastbolzen 24 zur Messung eines Messobjektes 65 zusammenwirkt. Die beiden Stützelemente 12 und 13 sind gleichartig gefertigt und umfassen einen Gleitkörper 70, der mittels einer Stellschraube 75 auf der Schiene 3 verriegelt werden kann, einen vertikal verstellbaren Arm 71, der mit Schrauben 72 gesichert wird, und einen am Arm 71 angeschraubten Stützfuss 72, der vorteilhafterweise mit Rollen 73 versehen ist.

Wie in Figur 3 dargestellt, sind die Messelemente 10 und 11 und Stützelemente 12 und 13 so dimensioniert, dass sie beim Verschieben auf den Schienen 2 und 3 frei aneinander vorbeigeführt werden können, was eine Vielfalt von Anwendungsmöglichkeiten zur Messung von Objekten verschiedener Gestalt und Grösse erlaubt.

Wie ersichtlich in den Figuren 6, 7 und 8 kann es sich für notwendig erweisen, zum Beispiel Walzen mit grosse Durchmessern zu messen. In diesem Fall ist es notwendig Messorgane 78, 79 zu verwenden, die mit langen und grossen Messschnäbeln 80, 81, zum Beispiel viertelkreisförmig, versehen sind. Messorgan 78 ist dabei auf der mit Massstab 7 versehenen Schiene 2 verschiebbar montiert und mit einem kapazitiven Aufnehmer 82 und einem Fenster 83 zur Messanzeige versehen. Ein Zustellelement 84 ist über eine Federkupplung mit dem Messorgan 78 verbunden, und kann mittels eines Verriegelungsorgans 85 auf der Schiene 2 arretiert werden. Das gegenüberliegende, als Gegenanschlagselement dienende Messorgan 79 ist auf der Schiene 3 verschiebbar montiert und kann durch ein Verriegelungsorgan 86 blockiert werden. Soll das Gerät auf Null gestellt werden oder sollten kleine Längen gemessen werden können die Oberteile der Messorgane 78, 79 aneinander vorbeigeschoben werden (Figuren 7 und 8).

Natürlich ist es möglich, auf den Schienen 2 und 3 auch nicht dargestellte Stützelemente verschiebbar anzuordnen oder das Messorgan 78 ohne Zustellelement 84 zu verwenden.

In Figur 9 ist eine weitere Variante dargestellt, bei der der Querbalken 90 von einem H-förmigen Hohlprofil, zum Beispiel aus nicht gehärtetem Stahl, gebildet ist, wobei vier U-förmige Führungselemente 91 aus gehärtetem Stahl an den vier Flügeln durch Kleben befestigt sind.

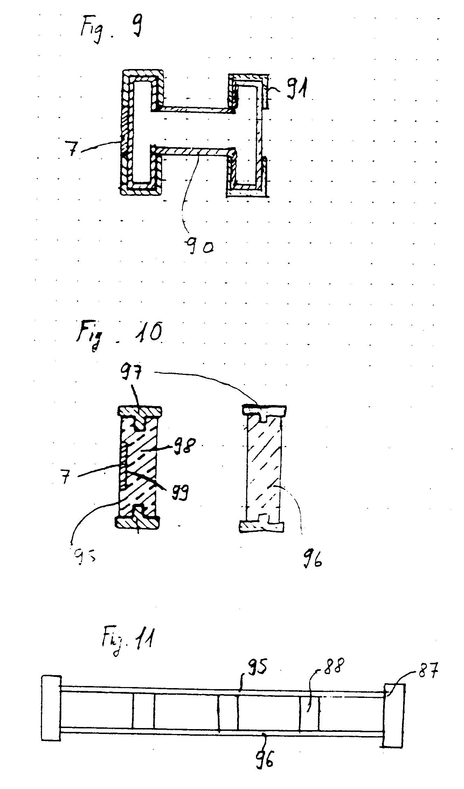

In Figur 10 werden zwei parallele Schienen 95 und 96 verwendet, deren Führungselemente durch T-Profile 97 gebildet sind, welche in die Schmalseiten des rechteckigen Kernes 98 eingelassen sind. Der Massstab 7 findet in einer Aussparung 99 des Kernes 98 Platz. Wie in Figur 11 dargestellt, sind die Schienen 95 und 96 an beiden Enden durch Befestigungsklammern 87 und in bestimmten Abständen über Zwischenstücke 88 verbunden, die so beschaffen sind, dass sie ein freies Gleiten der Mess- und Stützelemente erlauben. Für kurze Messgeräte, zum Beispiel von einer Länge bis 50 cm, kann es sich erübrigen solche Zwischenstücke 88 anzubringen.

## Patentansprüche

1. Längenmessgerät nach Art eines Messschiebers mit verschiebbar angeordneten zur Messung vorgesehen Messelementen (10, 11) und zur Abstützung des Gerätes vorgesehenen Stützelementen (12, 13), dadurch gekennzeichnet dass das Gerät zumindest zwei parallel zueinander verlaufende Schienen (2, 3) aufweist, auf welchen die Mess- und Stützelemente über die Länge des Gerätes verschoben werden können, wobei diese Elemente (10, 11, 12, 13) so beschaffen sind, dass auf verschiedenen Schienen verschiebbar angeordnete Elemente in entgegengesetzten Richtungen zumindest zum Teil aneinander vorbeigeführt werden können, wobei die Messelemente (10, 11) auf einer Messschiene (2) verschiebbar angeordnet sind und einen Messkopf (15) mit Taster (21) und Messaufnehmer (17) und ein auf der Messschiene (2) festklemmbares Gegenanschlagselement (11) mit Taster (61) umfassen, und wobei die Stützelemente (12, 13) auf einer Stützschiene (3) verschiebbar und festklemmbar angeordnet sind.

2. Längenmessgerät nach Art eines Messschiebers mit verschiebbar angeordneten, mit Messschnäbeln (80, 81) versehenen Messelementen (78, 79), dadurch gekennzeichnet, dass das Gerät zumindest zwei parallel zueinander verlaufende Schienen (2, 3) aufweist, auf welchen die Messelemente (78, 79) über die Länge des Gerätes verschoben werden können, wobei diese Elemente so beschaffen sind, dass auf verschiedenen Schienen verschiebbar angeordnete Elemente in entgegengesetzten Richtungen zumindest zum Teil aneinander vorbeigeführt werden können, wobei eines (78) der Messelemente mit einem Messaufnehmer (82) ausgerüstet ist und auf einer ersten mit Massstab (7) versehenen Schiene (2) verschiebbar angeordnet ist, während dem das zweite, als Gegenanschlagselement dienende Messelement (79) auf einer zweiten Schiene (3) verschiebbar und festklemmbar angeordnet ist.

3. Gerät gemäss Anspruch 1 oder 2, dadurch gekennzeichnet, dass die zwei Schienen (95, 96) an beiden Enden durch Befestigungsorgane (87) verbunden sind.

4. Gerät gemäss Anspruch 1 oder 2, dadurch gekennzeichnet, dass die zwei Schienen (95, 96) in bestimmten Abständen über Zwischenstücke (88) verbunden sind, die so beschaffen sind, dass sie ein freies Gleiten der Elemente erlauben.

5. Gerät gemäss Anspruch 1 oder 2, dadurch gekennzeichnet, dass die zwei Schienen (2, 3) über ihre ganze Länge miteinander über ein Verbindungsstück verbunden sind.

6. Gerät gemäss einem der Ansprüche 1 bis 5, dadurch gekennzeichnet, dass die Schienen (2, 3) als Verbundkonstruktion aufgebaut sind, bestehend aus einem Kern (8) und auf diesem befestigten Führungselementen (9).

7. Gerät gemäss einem der Ansprüche 1 bis 6, dadurch gekennzeichnet, dass die Schienen (2, 3) Rechteckform besitzen.

8. Gerät gemäss Anspruch 1, dadurch gekennzeichnet, dass die Taster (21, 61) in den Messelementen (10, 11) und Stützen (71) in den Stützelementen (12, 13) verschiebbar und festklemmbar aufgenommen sind.

9. Gerät gemäss Anspruch 1 oder 2, dadurch gekennzeichnet, dass der Messkopf (15) mit einem verschiebbar angeordneten und festklemmbaren Zustellelement (14, 84) gekoppelt ist.

10. Gerät gemäss Anspruch 9, dadurch gekennzeichnet, dass der Messkopf (15) derart über eine Federkupplung (36) mit dem Zustellelement (14) verbunden ist, dass bei festgeklemmten Zustellelement (14) der Messkopf entgegen dem Federdruck der Federkupplung (36) in entgegengesetzten Messrichtungen auf der Schiene (2) verschoben werden kann.

11. Gerät gemäss Anspruch 10, dadurch gekennzeichnet, dass die Federkupplung (36) einen Bolzen (37) aufweist, der im Messkopf (15) oder im Zustellelement (14) befestigt ist, und der ein Teilstück (48) aufweist, das in einer Aussparung (38) des Zustellelementes (14) oder des Messkopfes (15) längsverschiebbar gelagert ist, wobei dieses Teilstück (48) von einer Schraubenfeder (40) umgeben ist, die sich beidseitig auf einen Ring (45, 46) abstützt, und wobei jeder der beiden Ringe sowohl mit einem Vorsprung (43, 44) des Bolzens (37) als auch mit einem Vorsprung (45, 46) der Aussparung (38) zusammenwirkt.

12. Gerät gemäss Anspruch 9, dadurch gekennzeichnet, dass das Zustellelement (14) ein Klemmorgan (50) umfasst, welches einen von einer Feder (54) gegen die Schiene (2) gepressten Hebel (51) aufweist, welcher durch Betätigung eines Auslöseknopfes (55) von der Schiene (2) abgehoben werden kann.

## Claims

1. Linear measuring device of the type of a caliper rule, with measuring elements (10,11) which are displaceably arranged and provided for measurement, and with supporting elements (12,13) which are provided for supporting the device, characterized in that the device comprises at least two rails (2,3) extending in parallel to each other, on which the measuring and supporting elements can be displaced over the length of the device, these elements (10,11,12,13) being of such nature, that elements displaceably arranged on different rails can be displaced in opposite direction at least in part past one another, the measuring elements (10,11) being displaceably arranged on a measuring rail (2) and including a measuring head (15) with feeler (21) and measurement pick-up (17) and a counter stop element (11) with feeler (61) that can be fixedly clamped onto the measuring rail (2), the supporting elements (12,13) being arranged so that they can be displaced and clamped fixedly on a supporting rail (3).

2. Linear measuring device of the type of a caliper rule, with measuring elements (78,79) which are displaceably arranged and provided with measuring jaws (80,81), characterized in that the device comprises at least two rails (2,3) extending in parallel to each other, on which the measuring elements (78,79) can be displaced over the length of the device, these elements being of such nature, that elements displaceably arranged on different rails can be displaced in opposite direction at least in part past one another, one (78) of the measuring elements being equipped with a measuring pick-up (82) and being displaceably arranged on a first rail (2) provided with a scale (7) whereas the second measuring element (79), serving as a counter stop element is arranged on a second rail (3) so that it can be displaced and fixedly clamped.

3. Device according to claim 1 or 2, characterized in that the two rails (95,96) are joined at both ends by means of mounting members (87).

4. Device according to claim 1 or 2, characterized in that the two rails (95,96) are joined at certain intervals by way of intermediate members (88) of such a nature that they permit free sliding of the elements.

5. Device according to claim 1 or 2, characterized in that the two rails (2,3) are joined to each other over their entire length by way of a connecting piece.

6. Device according to one of claims 1-5, characterized in that the rails (2,3) are built up as a composite structure, consisting of a core (8) and guide elements (9) mounted thereon.

7. Device according to one of claims 1-6, characterized in that the rails (2,3) are of rectangular configuration.

8. Device according to claim 1, characterized in that the feelers (21,61) are accomodated in the measuring elements (10,11), and the supports (71) are accomodated in the supporting elements (12,13), so that they can be displaced and can be fixedly clamped in place.

9. Device according to claims 1 or 2, characterized in that the measuring head (15) is coupled with an adjusting element (14,84) that is arranged on the measuring rail (2) so that it is displaceable and can be fixedly clamped in place.

10. Device according to claim 9, characterized in that the measuring head (15) is connected to the adjusting element (14) by way of a spring coupling (36) in such a way that, with the adjusting element (14) being fixedly clamped, the measuring head can be shifted on the measuring rail (2) in opposite measuring directions against the spring force of the spring coupling (36).

11. Device according to claim 10, characterized in that the spring coupling (36) exhibits a pin (37) mounted in the measuring head (15) or in the adjusting element (14) and having a section (48) that is longitudinally displaceably arranged in a recess (38) of the adjusting element (14) or the measuring head (15) wherein this section (48) is surrounded by a coil spring (40) supported on both sides on a ring (45,46), and wherein each of the two rings cooperates with a projection (43,44) of the pin (37), as well as with a projection (45,46) of the recess (38).

12. Device according to claim 9, characterized in that the adjusting element (14) comprises a clamping member (50) exhibiting a lever (51) urged by a spring (54) against the rail (2), this lever being liftable off the rail (2) by operating a trigger button (55).

## Revendications

1. Appareil de mesure de longueur du genre pieds à coulisse avec des éléments de mesure (10,11) coulissants et prévus pour mesurer et avec des éléments de support (12,13) destinés à supporter l'appareil, caractérisé en ce que l'appareil comprend au moins deux rails (2,3) disposés parallèlement l'un par rapport à l'autre, sur lesquels les éléments de mesure et de support sont susceptibles d'être déplacés sur la longueur de l'appareil, ces éléments (10,11,12,13) étant conformés de façon que des éléments disposés de façon coulissante sur des rails différents peuvent être déplacés dans des directions opposées de manière à se croiser au moins partiellement, les éléments de mesure (10,11) étant disposés de façon coulissante sur un rail de mesure (2) et comprenant une tête de mesure (15), avec tâteurs (21) et capteur de mesure (17), et un élément de butée (11) avec tâteurs (61) pouvant être bloqué sur le rail (2), les éléments de support (12,13) étant disposés de façon coulissante sur un rail de support (3) sur lequel ils peuvent être bloqués.

2. Appareil de mesure de longueur du genre pied à coulisse avec des éléments de mesure (78,79) coulissants comportant des tâteurs (80,81), caractérisé en ce que l'appareil comprend au moins deux rails (2,3) disposés parallèlement l'un par rapport à l'autre, sur lesquels les éléments de mesure (78,79) sont susceptibles d'être déplacés sur la longueur de l'appareil, ces éléments étant conformés de façon que des éléments disposés de façon cou8lissante sur des rails différents peuvent être déplacés dans des directions opposées de manière à se croiser au moins partiellement, l'un (78) des éléments de mesure étant équipé avec un capteur de mesure (82) et disposé de façon coulissante sur un premier rail (2) comportant une règle (7), tandis que le second élément de mesure (79) servant d'élément de contrebutée est disposé de manière coulissante sur un deuxième rail (3) sur lequel il peut être bloqué.

3. Appareil selon les revendications 1 ou 2, caractérisé en ce que les deux rails (95,96) sont reliés à leurs extrêmités par des organes de fixation (87).

4. Appareil selon les revendications 1 ou 2, caractérisé en ce que les deux rails (95,96) sont reliés à des intervals déterminés par des entretoises (88) conformés de façon à permettre un coulissement libre des éléments.

5. Appareil selon les revendications 1 ou 2, caractérisé en ce que les deux rails (2,3) sont reliés sur toute leur longueur par une pièce de liaison.

6. Appareil selon l'une des revendications 1 à 6, caractérisé en ce que les rails (2,3) sont réalisés suivant une construction composite comprenant un noyau (8) sur lequel sont fixés des éléments de guidage (9).

7. Appareil selon l'une des revendications 1 à 6, caractérisé en ce que les rails (2,3) présentent une section rectangulaire.

8. Appareil selon la revendication 1, caractérisé en ce que les tâteurs (21,61) et les supports (71) sont disposés de façon déplaçable dans les éléments de mesure (10,11), respectivement de support (12,13) où ils peuvent être bloqués.

9. Appareil selon les revendications 1 ou 2, caractérisé en ce que la tête de mesure (15) est couplée à un organe de déplacement (14,84) disposé de façon coulissante et pouvant être bloqué.

10. Appareil selon la revendication 9, caractérisé en ce que la tête de mesure (15) est reliée à l'organe de déplacement (14) par l'intermédiaire d'un accouplement à ressorts (36) de telle façon que, lorsque l'organe de déplacement (14) est bloqué, la tête de mesure peut être déplacée sur le rail (2) dans des directions opposées à l'encontre de la force élastique de l'accouplement à ressorts (36).

11. Appareil selon la revendication 10, caractérisé en ce que l'accouplement à ressorts (36) comprend une cheville (37) fixée dans la tête de mesure (15) ou dans l'organe de déplacement (14) et comportant une portion (48) logée de façon coulissante longitudinalement dans un évidement (38) de l'organe de déplacement (14) ou de la tête de mesure (15), cette portion (48) étant entourée par un ressort à boudin (40) s'appuyant des deux côtés sur une rondelle (45,46), chacune de ces deux rondelles coopérant d'une part avec une saillie (43,44) de la cheville et d'autre part avec une saillie (45,46) de l'évidement (37).

12. Appareil selon la revendication 9, caractérisé en ce que l'organe de déplacement (14) comporte un organe de blocage (50) comprenant un levier (51) sollicité par un ressort (54) contre le rail (2) et gui peut être dégagé du rail (2) par l'actionnement d'un bouton de commande (55).
